# EUROPÄISCHE PATENTSCHRIFT

(11) **EP 3 604 809 B1**
(45) Veröffentlichungstag und Bekanntmachung des Hinweises auf die Patenterteilung: **12.07.2023**
(21) Anmeldenummer: 18187187.2
(22) Anmeldetag: 03.08.2018
(51) Int. Cl.: F04B 43/00, F16J 3/02, F16K 7/12, G06K 19/07

(54) **MEMBRAN MIT ELEKTRONIKBAUTEIL**
MEMBRANE WITH ELECTRONIC COMPONENT
MEMBRANE À COMPOSANT ÉLECTRONIQUE

(43) Veröffentlichungstag der Anmeldung: 05.02.2020
(73) Patentinhaber: SISTO Armaturen S.A., 6468 Echternach (LU)
(72) Erfinder: Britz, Robert, 6468 Echternach (LU)
(74) Vertreter: Busch, Tobias

(56) Entgegenhaltungen:
- EP-A1- 2 242 004
- EP-A1- 3 382 238
- DE-A1-102013 214 304
- DE-U1-202018 105 500
- DE-U1-202018 105 892
- US-A1- 2018 163 895

## Beschreibung

Die Erfindung betrifft ein Verfahren und eine Einheit zur Diagnose von Membranen in Ventilen oder Pumpen.

Die Überwachung oder Diagnose von Membranen in Ventilen und Pumpen ist insbesondere in kritischen Bereichen der sterilen Verfahrenstechnik ein deutlicher Schwerpunkt, dem im Wesentlichen durch vorsorgende Maßnahmen begegnet wird, da fortlaufend gemessene Zustandsgrößen weitestgehend nicht verfügbar sind. Messungen während des laufenden Betriebes sind teilweise nur schwer möglich. Anlagen müssen oft in allen Details steril reinigbar aufgebaut sein, weshalb übliche elektrische Stecker Anordnungen ungünstig sind. Eine Möglichkeit der Erfassung von Zustandsgrößen ist die Integration von Messgeräten in die Membran. Nach Ihrem Einsatz besteht die verbrauchte Membrane hauptsächlich aus Elastomer, wobei durch genannte Integration von Messgeräten mindestens ein Elektronikbauteil vorenthalten ist.

In der DE 10 2013 214 304 A1 wird ein Verfahren und eine Vorrichtung zum Auslesen und Sammeln von Daten aus einer Membran beschrieben.

Die WO2012035291 beschreibt ein Verfahren und eine Vorrichtung zur Diagnose eines Membranventils.

Die DE 10 2015 210 208 A1 beschreibt die Ermittlung von Zustandsgrößen bei Ventilmembranen.

Aufgabe der Erfindung ist es, eine Membran für Ventile und/oder Pumpen zu schaffen, bei der mindestens ein Datenspeicher vorgesehen ist, wobei die Membran nach ihrem Gebrauch einfach und kostengünstig zu rezyklieren sein soll. Weiter soll die Membran einfach und kostengünstig herstellbar sein und einzelne Komponenten sollen eventuell nach Gebrauch wiederverwertbar sein.

Diese Aufgabe wird erfindungsgemäß durch eine Vorrichtung mit den Merkmalen des Anspruchs 1 gelöst.

Dies hat den Vorteil, dass der Datenspeicher eine einfache Herstellung einer Membran mit einem Datenspeicher möglich ist, wobei der Datenspeicher gleichzeitig einfach von der Membran trennbar ist. Je nach Anwendungsgebiet fallen bei den Nutzern deutliche Mengen verbrauchter Membranen an. Diese sind zukünftig in ihre einzelnen Bestandteile zu zerlegen, um eine Wiederverwendung dieser zu vereinfachen. Wesentlich wird es hierfür sein, die mechanischen von den elektronischen Komponenten zu trennen. Mechanisch bedeutet in diesem Fall also das reine Membranmaterial, das meist aus einem Elastomer besteht, der eventuell durch eine beliebige Armierung verstärkt ausgeführt ist. Als elektronische Komponenten sind sämtliche weitere Bauteile zu verstehen. Hierzu zählen einfache Kontaktierungen, Sensoren, Datenspeicher oder komplexere Bauteile. Diese stellen einerseits eine "Verunreinigung" des Elastomermaterials dar, andererseits enthalten diese Bauteile Wertstoffe, die rezykliert werden sollten. Eine einfache Trennung beider Komponenten ist also der Ausgangspunkt für eine umweltschonende Weiterbehandlung verbrauchter Membranen.

In einer Ausgestaltung der Erfindung ist in einer Lage der Membran eine Ausnehmung vorgesehen, in der der Datenspeicher angeordnet ist, wobei der Datenspeicher soweit von der Membran umschlossen ist, dass er fest mit ihr verbunden ist. Gemäß der Erfindung ist dabei von Vorteil, dass bei der Herstellung der Membran, die eventuell aus mehreren Lagen bestehen kann, nur eine Lage mit einem zusätzlichen Arbeitsschritt für die Aufnahme des Datenspeichers oder eines anderen Elements, wie zum Beispiel einer elektronischen Komponente, bearbeitet werden muss. Diese Ausnehmung kann im Herstellprozess der Membran direkt mit dem Datenspeicher bestückt werden, so dass eine einsatzbereite Membran hergestellt wird.

Gemäß der Erfindung ist der Datenspeicher vollständig von der Membran umgeben.

Durch eine derartige oder vergleichbare Einbettung des Datenspeichers in die Membran ist eine innige Verbindung hergestellt, insbesondere eine, die das Eindringen von Fremdstoffen verhindert.

Erreichbar ist diese Umschließung des Datenspeichers dadurch, dass der Teil der Membran, der aus dem Gehäuse herausragt, der häufig als Lasche, Lappen oder Fahne bezeichnet wird, aus einer einzelnen Lage elastomeren Materials besteht, wobei der Datenspeicher in der Lage eingebettet ist. Dies hat den Vorteil, dass im Herstellprozess nur eine Lage der eventuell aus mehreren Lagen bestehenden Membran zusätzlich bearbeitet werden muss. Dies wird beispielsweise dadurch erreicht, dass die einzelne Lage des elastomeren Materials um den Datenspeicher herumgeschlagen ist. Der Datenspeicher kann somit sicher integriert werden und lässt sich dennoch später wieder einfach aus der Membran entfernen. Hierzu ist es vorteilhaft, wenn in der einzelnen Lage des elastomeren Materials im Bereich um den Datenspeicher herum mindestens eine Sollbruchstelle vorgesehen ist. Diese vereinfacht ein späteres Öffnen der Membran zur Entnahme des Datenspeichers.

Weiter ist es die Aufgaben der Erfindung eine Membran nach der vorbeschriebenen Art herzustellen, wobei in einem ersten Schritt der Datenspeicher oder ein anderes elektronisches oder elektrotechnisches Bauteil in die Lage des elastomeren Materials eingebettet wird, wobei der Datenspeicher vollständig oder teilweise von der einen Lage des elastomeren Materials umschlossen wird, in einem zweiten Schritt die Membran regulär in einem Membranventil oder einer Membranpumpe mit einem Datenspeicher benutzt wird, in einem dritten Schritt verbrauchte Membran aus dem Membranventil oder der Membranpumpe entfernt wird und in einem vierten Schritt der Datenspeicher entfernt wird. Von Vorteil ist dabei, dass die einzelnen Komponenten der Membran auf einfache und kostengünstige Weise der Wiederverwertung zugeführt werden können. Insbesondere die Trennung von Elektronik und Elastomer gestaltet sich schwierig, wenn der Verbund derart gestaltet ist, dass die Elektronik im Elastomer eingebettet ist. Häufig lässt sich eine Trennung nur nach thermischer Zerstörung des Elastomers durchführen.

Gemäß der Erfindung sind bei einem vollständig umschlossenen Datenspeicher Sollbruchstellen im Elastomer derart vorzusehen, dass der Datenspeicher werkzeuglos aus dem Elastomer entfernt werden kann.

Weitere Merkmale und Vorteile der Erfindung ergeben sich aus der Beschreibung von Ausführungsbeispielen anhand von Zeichnungen und aus den Zeichnungen selbst.

Dabei zeigt:
Figur 1 eine nicht Erfindungsgemäße Membran mit einem Datenspeicher und die
Figur 2 ein Verfahren zur Herstellung einer nicht erfindungsgemäßen Membran.

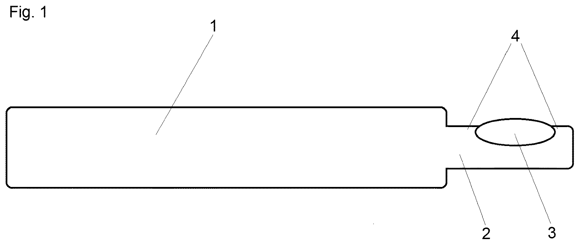

Figur 1 zeigt eine Membran 1, wie sie beispielsweise in einem Membranventil zur Anwendung kommt. Die Membran 1 ist beispielsweise aus mehreren Lagen elastomeren Materials aufgebaut, das bedarfsweise mit einer Verstärkung, beispielsweise einem Gewebe versehen sein kann. Diese Membran verfügt über einen sogenannten Lappen 2, der auch als Lasche oder Fahne bezeichnet wird. Ist die Membran in einem Ventil- oder Pumpengehäuse montiert, so ragt dieser Lappen 2 aus dem Gehäuse heraus. Die Membran kann zusätzlich über eine spezielle Form verfügen, die durch eine Kammerung für zusätzliche Vorteile sorgt. Diese Ausgestaltung ist in der Figur nicht dargestellt

Die Membran 1 wird in einem Ventil- oder Pumpengehäuse befestigt und durch einen Aktor bewegt, wodurch sich beispielsweise ein Ventil öffnen oder schließen oder die Pumpwirkung erzielen lässt.

Erfindungsgemäß ist der Lappen aus einer Lage elastomeren Materials ausgestaltet.

Die weiteren Lagen der Membran ragen nicht in den Bereich des Lappens 2 vor. In dem Lappen 2 befindet sich erfindungsgemäß ein Datenspeicher 3. Dieser Datenspeicher 3 kann beispielsweise als rein passives Element ausgestaltet sein und eine Identitätskennzeichnung der Membran 1 enthalten. Durch eine eindeutige Nummer kann die Historie und Verwendung der Membran beispielsweise aus den Daten einer entsprechenden Datenbank entnommen werden. Er kann aber auch mit einer Datenerfassungsvorrichtung, beispielsweise einem Sensor verbunden sein, für den er die erfassten Daten speichert.

Der Datenspeicher 3 kann entweder durch direkten Kontakt mit einem Auslesegerät ausgelesen werden oder aber es findet eine kontaktlose Datenauslesung statt, beispielsweise über eine RFID Technik oder vergleichbares. Der Datenspeicher 3 kann über eine eigene Energieversorgung verfügen, oder aber durch das Auslesegerät versorgt werden.

Wesentlich bei der Anordnung des Datenspeichers 3 in dem Lappen 2 ist die nur teilweise Umschließung des Datenspeichers 3, die es ermöglicht, dass der Datenspeicher mit einfachen Mitteln aus dem Lappen 2 entfernbar ist. Insbesondere ist es möglich, den Datenspeicher 3 werkzeuglos aus dem Lappen 2 auszudrücken. Hierbei ist der durch die Haltekraft des umgebenden Haltebereichs 4 im Lappen 2 zu überwinden. Je nach Ausgestaltung kann dies mit unterschiedlichen Aufwand verbunden sein.

Je nach Anwendung ist es notwendig, den Haltebereich 4 besonders innig mit dem Datenspeicher 3 zu verbinden. Eventuelle Anwendungen in der Steriltechnik erfordern quasi totraumfreie Membranen. Hier wäre also darauf zu achten, dass es während der regulären Nutzung der Membran 1 nicht möglich ist, zwischen dem Haltebereich 4 und dem Datenspeicher 3 Hohlräume auszubilden. Der Datenspeicher 3 kann beispielsweise in einem Gehäuse aus elastomerem Material angeordnet sein. Ist dieses das identische Material aus dem auch die Membran 1 oder der Lappen 2 hergestellt ist, so kann es sehr einfach möglich sein eine kontinuierliche Vernetzung der Materialien zu erlangen, wodurch eine Abdichtung zwischen der Membran und dem Datenspeicher in idealer Weise ausgebildet werden kann. Der Datenspeicher kann in den Haltebereich auch durch einen Kleber oder ein vergleichbares Hilfsmittel in dem Haltebereich derart fixiert sein, dass sämtliche Toträume mit dem Mittel ausgefüllt sind. Dies ermöglicht den Einsatz der Membran mit dem Datenspeicher unter Bedingungen, die höchste Anforderungen an die Reinigbarkeit stellen.

Kommt ein Datenspeicher zum Einsatz, der in einem Metallgehäuse angeordnet ist, so kann dieser ebenfalls totraumfrei in die Membran eingepasst werden. Entweder ist dies durch eine entsprechende Passform im Haltebereich zu erreichen oder es kann auch ein Kleber oder ein vergleichbares Hilfsmittel verwendet werden. Auf metallischen Oberflächen lassen sich zudem auch elektrische Kontaktierungen für den Datenspeicher einrichten.

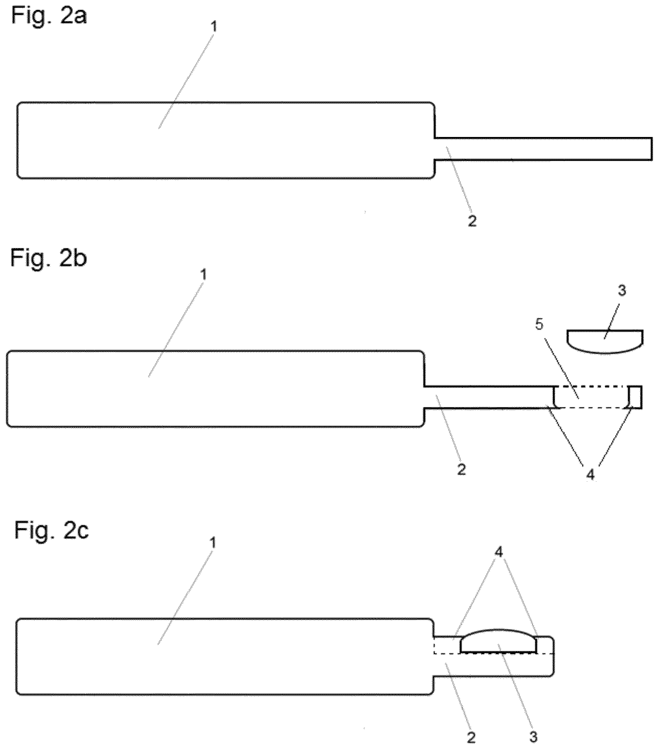

Die Fig. 2 zeigt den Herstellungsprozess einer nicht erfindungsgemäßen Membran beispielhaft am Umschlagen einer einzelnen Schicht von elastomerem Material. In Fig. 2a ist die eine Elastomerlage unbearbeitetem Zustand gezeigt. Das Rohmaterial wird später eine Membran 1 und einen Lappen 2 ausbilden. In Fig. 2b ist die Herstellung einer Ausnehmung 5 im Bereich des Lappens 2 gezeigt. Diese Ausnehmung 5 geht durch die gesamte Dicke des Materials hindurch, sodass ein später einzusetzendes Bauteil, insbesondere der Datenspeicher 3, einfach eingelegt werden kann. Das Bauteil 3 wird an dem Haltebereich 4 sicher in der Ausnehmung 5 gehalten. In Fig. 2c ist die fertige nicht erfindungsgemäße Membran dargestellt. Der Teil des Lappens 2, der der Datenspeicher 3 festhält wurde durch Umklappen so mit dem übrigen Lappen verbunden, dass der Datenspeicher 3 sicher von der einen Lage der Membran 1 umschlossen ist.

### Bezugszeichenliste:

| | | | |
|---|---|---|---|
| 1 | Membran | 4 | Haltebereich |
| 2 | Lappen | 5 | Ausnehmung |
| 3 | Datenspeicher | | |

## Patentansprüche

1. Membran (1) eines Membranventils oder einer Membranpumpe, wobei das Membranventil oder die Membranpumpe ein Gehäuse aufweist, umfassend ein erstes Bauteil, bestehend aus einer Membran (1), die im Gehäuse vorgesehen sein kann, wobei die Membran (1) in einem Ventil- oder Pumpengehäuse befestigbar ist und durch einen Aktor bewegt werden kann, wodurch sich das Ventil öffnen oder schließen lässt oder die Pumpwirkung erzielt werden kann, wobei ein Teil der Membran (1) als Lappen (2) aus dem Gehäuse herausragen kann, und ein zweites Bauteil, bestehend aus einem Datenspeicher (3),
**dadurch gekennzeichnet, dass**
der Datenspeicher (3) derart in der Membran angeordnet ist, dass er ausdrückbar verbunden ist, wobei der Teil der Membran (1), der aus dem Gehäuse herausragt aus einer einzelnen Lage elastomeren Materials besteht, wobei der Datenspeicher (3) in der Lage eingebettet und vollständig von der Membran umgeben ist, wozu bei einem vollständig umschlossenen Datenspeicher (3) Sollbruchstellen im Elastomer der Membran (1) derart vorgesehen sind, dass der Datenspeicher (3) werkzeuglos aus dem Elastomer entfernt werden kann.

2. Membran (1) nach Anspruch 1, **dadurch gekennzeichnet, dass** in einer Lage der Membran (1) eine Ausnehmung vorgesehen ist, in der der Datenspeicher (3) angeordnet ist, wobei der Datenspeicher soweit von der Membran (1) umschlossen ist, dass er fest mit ihr verbunden ist.

3. Membran (1) nach Anspruch 1 oder 2, **dadurch gekennzeichnet, dass** die einzelne Lage des elastomeren Materials um den Datenspeicher (3) herumgeschlagen ist.

4. Membran (1) nach Anspruch 3, **dadurch gekennzeichnet, dass** in der einzelnen Lage des elastomeren Materials (1) im Bereich um den Datenspeicher (3) herum die Sollbruchstellen vorgesehen sind.

5. Verfahren zur Herstellung und Nutzung einer Membran (1) nach einem der vorherigen Ansprüche, **dadurch gekennzeichnet, dass** in einem ersten Schritt der Datenspeicher (3) in die Lage des elastomeren Materials eingebettet wird, wobei der Datenspeicher (3) vollständig oder teilweise von der einen Lage des elastomeren Materials umschlossen wird, in einem zweiten Schritt die Membran (1) regulär in einem Membranventil oder einer Membranpumpe mit einem Datenspeicher (3) benutzt wird, in einem dritten Schritt verbrauchte Membran (1) aus dem Membranventil oder der Membranpumpe entfernt wird und in einem vierten Schritt der Datenspeicher entfernt wird.

6. Verfahren nach Anspruch 5, **dadurch gekennzeichnet, dass** zum Herausdrücken vorbereitend die umschließende Lage elastomeren Materials geöffnet wird, insbesondere entlang von Sollbruchstellen.

## Claims

1. Membrane (1) of a membrane valve or a membrane pump, wherein the membrane valve or the membrane pump has a housing, comprising a first component, consisting of a membrane (1), which can be provided in the housing, wherein the membrane (1) is fastenable in a valve or pump housing and can be moved by an actuator, by which the valve may be opened or closed or the pump action can be achieved, wherein a part of the membrane (1) can protrude out of the housing as a lobe (2), and a second component, consisting of a data memory (3), **characterized in that** the data memory (3) is arranged in the membrane in such a way that it is connected so it can be pressed out, wherein the part of the membrane (1) which protrudes out of the housing consists of a single layer of elastomer material, wherein the data memory (3) is embedded in the layer and completely enclosed by the membrane, for which, with a completely enclosed data memory (3), predetermined breaking points are provided in the elastomer of the membrane (1) in such a way that the data memory (3) can be removed from the elastomer without tools.

2. Membrane (1) according to Claim 1, **characterized in that** a recess is provided in a layer of the membrane (1), in which the data memory (3) is arranged, wherein the data memory is enclosed by the membrane (1) enough that it is firmly connected thereto.

3. Membrane (1) according to Claim 1 or 2, **characterized in that** the single layer of the elastomer material is wrapped around the data memory (3).

4. Membrane (1) according to Claim 3, **characterized in that** the predetermined breaking points are provided in the single layer of the elastomer material (1) in the area around the data memory (3).

5. Method for producing and using a membrane (1) according to any one of the preceding claims, **characterized in that**, in a first step, the data memory (3) is embedded in the layer of the elastomer material, wherein the data memory (3) is completely or partially enclosed by the one layer of the elastomer material, in a second step, the membrane (1) is used regularly in a membrane valve or a membrane pump having a data memory (3), in a third step, the used membrane (1) is removed from the membrane valve or the membrane pump, and in a fourth step, the data memory is removed.

6. Method according to Claim 5, **characterized in that**, to prepare for pressing out, the enclosing layer of elastomer material is opened, in particular along predetermined breaking points.

## Revendications

1. Membrane (1) d'une soupape ou d'une pompe à membrane, dans laquelle la soupape à membrane ou la pompe à membrane comporte un boîtier comprenant un premier composant constitué d'une membrane (1) qui peut être prévue dans le boîtier, dans laquelle la membrane (1) peut être fixée dans un boîtier de soupape ou de pompe et peut être déplacée par un actionneur, de sorte que la soupape peut être ouverte ou fermée ou que l'effet de pompage peut être obtenu, dans laquelle une partie de la membrane (1) peut dépasser du boîtier sous la forme d'une patte (2), et un deuxième composant constitué d'une mémoire de données (3),
**caractérisée en ce que**
la mémoire de données (3) est disposée dans la membrane de telle sorte qu'elle soit reliée de manière à pouvoir être expulsée, dans laquelle la partie de la membrane (1) qui dépasse du boîtier est constituée d'une couche unique de matériau élastomère, dans laquelle la mémoire de données (3) est incorporée dans la couche et est entièrement enveloppée par la membrane, ce qui permet, dans le cas d'une mémoire de données (3) entièrement enveloppée, de prévoir des points de rupture dans l'élastomère de la membrane (1) de telle sorte que la mémoire de données (3) puisse être retirée de l'élastomère sans utiliser d'outil.

2. Membrane (1) selon la revendication 1, **caractérisée en ce qu'**il est prévu dans une couche de la membrane (1) un évidement dans lequel est disposée la mémoire de données (3), dans laquelle la mémoire de données est entourée par la membrane (1) au point d'être solidaire de celle-ci.

3. Membrane (1) selon la revendication 1 ou 2, **caractérisée en ce que** la couche unique du matériau élastomère est rabattue autour de la mémoire de données (3) .

4. Membrane (1) selon la revendication 3, **caractérisée en ce que** les points de rupture sont prévus dans la couche unique du matériau élastomère (1) dans la zone qui entoure la mémoire de données (3).

5. Procédé de fabrication et d'utilisation d'une membrane (1) selon l'une des revendications précédentes, **caractérisé en ce que**, lors d'une première étape, la mémoire de données (3) est incorporée dans la couche du matériau élastomère, la mémoire de données (3) étant entièrement ou partiellement entourée par ladite une couche de matériau élastomère, lors d'une deuxième étape, la membrane (1) est utilisée de manière régulière dans une soupape à membrane ou une pompe à membrane dotée d'une mémoire de données (3), lors d'une troisième étape, la membrane usagée (1) est retirée de la soupape à membrane ou de la pompe à membrane et lors d'une quatrième étape, la mémoire de données est retirée.

6. Procédé selon la revendication 5, **caractérisé en ce que**, pour l'expulsion, la couche d'enveloppement en matériau élastomère est préalablement ouverte, en particulier le long de points de rupture.
